Europäisches Patentamt

European Patent Office

Office européen des brevets

(11) Publication number: **0 142 986**
**A2**

# (12) EUROPEAN PATENT APPLICATION

(21) Application number: **84307905.4**

(22) Date of filing: **14.11.84**

(51) Int. Cl.⁴: **B 60 R 22/24**

(30) Priority: **19.11.83 GB 8330917**
**02.03.84 GB 8405558**

(43) Date of publication of application:
**29.05.85 Bulletin 85/22**

(84) Designated Contracting States:
**DE FR GB IT SE**

(71) Applicant: **BRITAX (WINGARD) LIMITED**
**Chandler Road**
**Chichester Sussex, PO19 2UG(GB)**

(72) Inventor: **Cunningham, Douglas James**
**Sambourne 4 Church Close Dunton Bassett**
**Lutterworth Leicestershire LE16 5JY(GB)**

(74) Representative: **Hollinghurst, Antony**
**Britax Central Services 40 Granby Avenue**
**Garretts Green Birmingham, B33 0SJ(GB)**

(54) Safety belt system.

(57) A safety belt system for a motor vehicle comprises a strap (72) arranged, in use, to extend from the user's shoulder through a slot (70) in an anchorage member (62) secured to the body (52) of the vehicle behind the user's shoulder and thence on to a retractor mounted below the anchorage member (62), which is rigidly secured to the body of the vehicle, the slot (70) in the anchorage member (62) having a concave edge round which the strap engages, characterised in that the radius of curvature of the concave edge is not less than the width of the strap.

FIG 5

EP 0 142 986 A2

"Safety Belt System"

This invention relates to a safety belt system for a motor vehicle including a strap arranged, in use, to extend from the user's shoulder through a slot in an anchorage member secured to the body of the vehicle behind the user's shoulder and a vehicle safety belt anchorage which is used to anchor the shoulder strap at shoulder level on the car body and which has a slot through which the belt strap can run to and fro when being withdrawn from and retracted on to a safety belt retractor.

Hitherto, it has been customary for the anchorages of such systems to be mounted on the vehicle body for pivotal movement about a horizontal transverse axis relative to the vehicle so as to allow them to take up an angle approximately bisecting the angle between the part of the strap extending towards the retractor and the part of the strap extending towards the shoulder of the user when the belt is in use, and to pivot to a substantially vertical position when the belt is removed. This pivoting action permits the belt to travel freely through the slot without tending to "bunch" at one end of the slot. Pivoting anchorages of this type are disclosed in Patent Specifications GB-A-1433279 and GB-A-1509296.

The present invention is concerned with the provision of a safety belt system of the foregoing type having a shoulder anchorage which is adapted to be rigidly secured to the vehicle body and which is arranged to prevent bunching of the strap in the slot thereof.

According to the invention, a safety belt system for a motor vehicle includes a strap arranged, in use, to extend from the user's shoulder through a slot in an anchorage member secured to the body of the vehicle behind the user's shoulder and thence on to a retractor mounted below the anchorage member, which is rigidly secured to the body of the vehicle, the slot in the anchorage member having a concave edge round which the strap engages, the radius of curvature of the concave edge being not less than the width of the strap.

If the radius of the concave edge is too small, the strap is subject to unacceptable abrasion.

The length  of the slot is such that the rear end thereof is behind  the rear edge of that part of the strap which  extends  from the anchorage member to the retractor while the front end thereof is in front of the front edge of that part of the strap  which  extends from the anchorage  member  to  the  shoulder  of  the user, in use. Preferably the length of the slot is not  substantially greater than the  dimensions necessary to meet these criteria, thereby minimising the overall size thereof and, in particular the projection  thereof, if any, beyond the sides of the B-post or other part  of the vehicle on which the anchorage  member is mounted.  Preferably the length of the slot is at least one and a half times the width of the strap.

In one form of the invention, the anchorage member comprises a  metal  core  embedded  in  a  body  of  a mouldable material,  as described  in Patent Specification No. WO-A-8100213.  Alternatively, it may take the form  of a loop bent from wire, with the ends of the wire  received  in  a  sleeve  formed  from  pressed sheet metal, as described in Patent Specification No. GB-A-1433279.

The anchorage  member  may  be  secured  to,  or  be  formed integrally  with,  a  traveller  which  is  slidably  mounted  on  a vertically extending  track secured to the vehicle body.  Preferably the  traveller  carries  a pivotally mounted lever having a manually operable pushbutton on one side of the pivot and a latch  member  on the  other,  the  latch  member being movable between a position  of engagement  with a selected one of a row of latching  formations  on the track and a position of disengagement therefrom.

Three embodiments of the invention will now be described, by way  of  example,  with  reference to the accompanying drawings,  in which:

Figure 1  is  an  elevational view of an anchorage member in accordance with a first embodiment of the invention;

Figure 2  is  a  cross-sectional view taken on the line 2 - 2 in Figure 1;

Figure 3 is a side view of an anchorage member in accordance with a second embodiment of the invention;

Figure 4 is  a  cross-sectional view taken on the line 4 - 4 in Figure 3; and

Figure 5 is a perspective view of an anchorage member of the type shown in Figure 1, having provision for height adjustment.

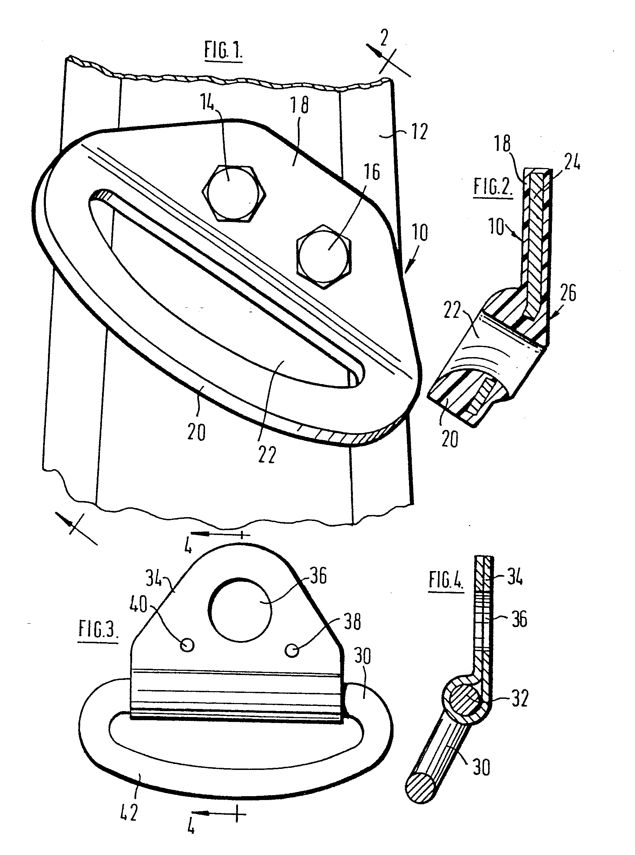

Figures 1 and 2 show the anchorage member 10 of a safety belt system in accordance with the invention, the anchorage member 10 being secured to the interior of the B-post 12 on the right-hand side of a motor vehicle by means of two bolts 14 and 16 which extend through respective holes in an upper part 18 thereof. The lower part 20 of the anchorage member 10 is inclined at about 30 degrees to the upper part away from the B-post 12 and is provided with a slot 22 to receive the strap of a safety belt.

As can best be seen from Figure 2, the anchorage member 10 is formed with a metal core 24 which is embedded in moulded plastics material 26. The core 24 has a slot corresponding to the slot 22. The plastics material forming the bottom part 20 of the anchorage member is of greater thickness than that forming the upper part 18 so as to provide a convex surface of relatively large radius to form the bottom edge of the slot 22.

In accordance with the invention, the bottom edge of the slot 22 is concave. When the safety belt is not in use, the strap for the user's shoulder hangs vertically adjacent to the part of the strap extending from the anchorage member 10 to the retractor (not shown) which is mounted close to the bottom of the B-post 12 and the strap passes through the slot 22 adjacent to its right-hand end. On the other hand, when the safety belt is in use, the portion of the strap extending to the user's shoulder is deflected forwardly from its previous vertical position and consequently leaves the slot 22 adjacent to its left-hand end as viewed in Figure 1.

The slot 22 of an anchorage member in accordance with Figures 1 and 2, for use with standard 48mm. safety belt webbing, may be 75mm. wide and the radius of curvature of its bottom edge can conveniently be 65mm. The convex radius of curvature of the bottom edge of the slot in planes perpendicular to the adjacent part of the metal core 24 can be 10mm. As can be seen, such an anchorage member projects slightly beyond the sides of the B-post 12. In general, with standard-width safety belt webbing, it will not be feasible for the concave radius of curvature to be greater than 85mm.

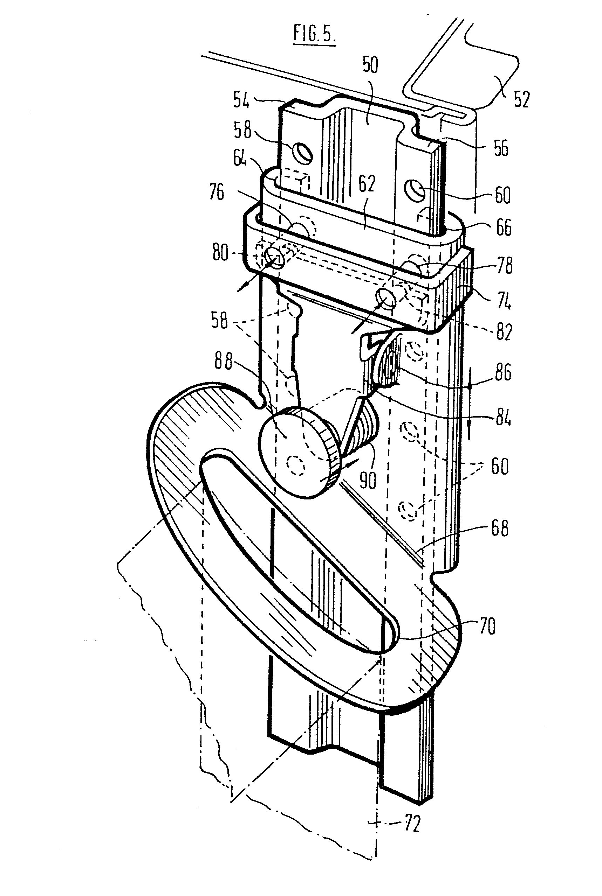

Turning now to Figures 3 and 4, an alternative anchorage member in accordance with the invention may be formed from a wire loop 30 of tempered steel with the ends 32 thereof bent towards each other into close proximity and enclosed in a sleeve formed from a sheet steel member 34. The two ends of the sheet steel member 34 are welded together to form a fastening lug having a hole 36 for receiving a bolt by which the anchorage member may be secured to the body of a motor vehicle. The fixing lug also has two smaller holes 38 and 40, one or other of which is used to secure the anchorage member at a fixed orientation about the bolt (not shown) extending through the hole 36.

In accordance with the invention, the part 42 of the wire loop 30 round which the strap of a safety belt is folded, is shaped to provide the corresponding edge of the slot with a concave surface of radius not less than the width of the strap. The width of the slot and the radius of curvature of its bottom edge may be as described above with reference to Figures 1 and 2. Satisfactory results have been obtained with wire of 8mm. diameter but, in general, it is preferable to use wire of 20mm. diameter so as to provide a large radius surface for the strap to be deflected around.

Referring now to Figure 5, a vertically extending track 50 is secured to the interior of the B-post 52 on the right-hand side of a motor vehicle. The track 50 has two side flanges 54 and 56 which are spaced from the B-post 52 and each of which contains a row of uniformly spaced holes 58, 60.

A metal plate 62 has its sides bent back on themselves so as to form two mutually confronting channel formations 64 and 66 which embrace the edges of the flanges 54 and 56 of the track so that the plate 62 is slidable therealong in the vertical direction but is held captive thereon against horizontal displacement. The bottom of the plate 62 is bent outwardly away from the track 50 along an oblique fold line 68, is of the same shape as the anchorage member 10 of Figures 1 and 2, and has a slot 70, similar to the slot 22, for receiving the strap of a safety belt 72.

A bridge member 74 is secured to the outsides of the channels 64 and 66 so as to extend across the plate 62 on the opposite side to the track 50. Two bolts 76 and 78 are mounted in respective pairs of aligned holes in the bridge member and the plate 62, for movement into and out of engagement with a selective pair of holes 58, 60 in the flanges 54 and 56 of the track 50 so as to prevent movement therealong of the plate 62. Each of the bolts 76 and 78 has a notch 80, 82 in its lower surface for receiving the edge of a lever 84 which is pivotally mounted on lugs projecting from the plate 62 by a pivot pin 86. A push button 88 is mounted on the lower end of the lever 86. A compression spring 90 engages between the plate 62 and the lever 84 behind the push button 88 so as to urge the lower end of the lever 84 outwardly and thus push the bolts 76 and 78 into engagement with the track. Assuming that the bolts 76 and 78 are aligned with one of the pairs of holes 58, 60, the plate 62 is imobilised on the track. In order to adjust its vertical position, the user merely has to depress the push button 88, thereby disengaging the bolts 76 and 78 and allowing the plate 62 to slide along the track.

Obviously an anchorage of the type illustrated in Figures 3 and 4 may be mounted on a traveller as illustrated in Figure 5.

CLAIMS

1.      A safety belt system  for a motor vehicle comprising a strap arranged, in use, to extend from the user's shoulder  through a slot (22, 70) in an anchorage  member (10, 30, 62) secured to the body of the  vehicle behind the user's shoulder and thence on to a retractor mounted below  the  anchorage  member (10, 30, 62), which is rigidly secured  to  the  body  of  the  vehicle,  the  slot  (22, 70)  in the anchorage member (10, 30, 62) having a concave edge  round which the strap engages, characterised in that the radius of curvature  of the concave edge is not less than the width of the strap.

2.      A safety belt  system  according  to  claim  1,  wherein the length  of  the  slot  (22, 70)  is  such that the rear end thereof  is behind  the rear edge of that part of the strap which  extends  from the  anchorage member (10, 30, 62) to the retractor while the  front end thereof is in front of the front edge of that part  of the strap which extends from the anchorage member (10, 30, 62) to the shoulder of the user.

3.      A safety belt system  according to  claim  2,  wherein  the length  of  the slot (22, 70)  is at least one and a half  times  the width of the strap.

4.      A safety belt  system  according to claim 1, 2 or 3, wherein the anchorage member (10) comprises a metal core (24) embedded  in a body (26) of a mouldable material.

5.      A safety belt system  according  to claim 1, 2 or 3, wherein the anchorage member (30) comprises a loop bent from wire,  with the ends of the wire received  in  a  sleeve  formed  from pressed sheet metal.

6.      A safety belt system  according  to claim 1, 2 or 3, wherein the  anchorage  member  is secured to, or formed integrally with,  a traveller  (62)  which is slidably mounted on a vertically extending track (50) secured to the vehicle body (52).

7.      A safety belt system  according  to claim 6, wherein a lever (84) is mounted on the  traveller (62) by means of a pivot (86), and has  a  manually operable pushbutton (88) on one side of  the  pivot (86) and a latch member (76, 78) on the other, the latch member (76, 78) being movable between a position of engagement with a selected one of a row of latching formations (58, 60) on the track (50) and a position of disengagement therefrom.

FIG.1.

FIG.2.

FIG.3.

FIG.4.

FIG.5.